# EUROPEAN PATENT SPECIFICATION

(11) **EP 4 291 590 B1**
(45) Date of publication and mention of the grant of the patent: **29.01.2025**
(21) Application number: 22728250.6
(22) Date of filing: 10.05.2022
(51) Int. Cl.: C08G 18/22, C08G 18/32, C08G 18/73, C08G 18/79, C08G 18/80, C09D 11/30, B33Y 70/00, B33Y 10/00, B33Y 80/00, C09D 11/101, C09D 11/106, C08F 220/18, C08F 290/06, B29C 64/112, B29C 64/40, B33Y 40/20, B29C 64/30

(54) **DUAL CURE ISOCYANATE INKJET COMPOSITION**
DUALHÄRTENDE ISOCYANATTINTENSTRAHLZUSAMMENSETZUNG
COMPOSITION D'ISOCYANATE À DOUBLE DURCISSEMENT POUR JET D'ENCRE

(30) Priority: 09.06.2021 EP 21178536
(43) Date of publication of application: 20.12.2023
(73) Proprietor: ALTANA New Technologies GmbH, 46483 Wesel (DE)
(72) Inventor: ASMACHER, Anne, 46483 Wesel (DE); REISER, René, 46483 Wesel (DE); LANGHORST, Sascha, 46483 Wesel (DE); RÖTTGER, Max, 46483 Wesel (DE)
(74) Representative: Altana IP Department
(86) International application number: PCT/EP2022/062680
(87) International publication number: WO 2022/258286

(56) References cited:
- WO-A1-2020/109769
- US-A1- 2009 105 363
- US-A1- 2015 064 417
- US-B2- 10 005 911
- RAHN: "Genorad 22 Safety Data Sheet", 27 November 2020 (2020-11-27), Zürich, pages 1 - 10, XP055855079, Retrieved from the Internet <URL:https://www.rahn-group.com/de/energycuring/produkte/category/18/> [retrieved on 20211026]

## Description

The present invention relates to an inkjet composition, its use, a process for printing a three-dimensional object and the three-dimensional object.

Three dimensional (3D) printing or additive manufacturing is a process in which a 3D digital model is manufactured by the accretion of construction material. The 3D printed object is created by utilizing the computer-aided design (CAD) data of an object through sequential construction of two dimensional (2D) layers that correspond to cross-sections of 3D objects. These layers were printed over one another with the proviso that each layer is rapidly cured (e.g. by UV curing) before the next layer is printed accordingly.

One way to perform said 3D printing is inkjet printing: In inkjet printing, tiny drops of ink (having a limited viscosity) are projected directly onto a receiver surface without physical contact between the printing device and the ink-receiver. The printing device stores the printing data electronically and controls a mechanism for ejecting the drops image-wise. Printing is accomplished by moving a print head across the ink-receiver or vice versa or both.

Three-dimensional inkjet printing is a relatively speedy and flexible printing method for the production of prototype parts, tooling and rapid manufacturing of three-dimensional complex structures directly from a CAD file. Radiation curable compositions for use in three-dimensional printing methods of complex structures are e.g. described in WO 2004/096514. However, there are generally many radiation curable compositions described in the art which might be used in the field of inkjet printing, like in WO 2020/109769, US 2015/064417, US 10005911 and US 2009/105363.

Challenges encountered with said 3D printing are poor mechanical properties such as low heat deflection temperature, brittleness and ageing meaning the embrittlement over time and/or under temperature change and/or humidity. Another challenge encountered with said 3D printing are the incomplete curing of the (initially) printed 3D object (so called "green body") and also several quality problems (e.g. mechanical aspects and/or product ageing) concerning the final product. If the 3D object is cured completely during the 3D printing process, the interlayer adhesion is too weak and the print may fail.

However, uncured resin inside the final product is also undesirable:
First, uncured liquid resin leaking ("bleeding") from the printed 3D objects may cause health problems to end users because the liquid resin may contain reactive chemicals. Second, the printed 3D objects do not reach optimal mechanical performance because the uncured liquid resin may soften the object. Third, the uncured resin may cause problems in some industrial applications of the objects where high chemical inertia is required. In order to fully cure the printed "green body" objects (to avoid the said disadvantages), a corresponding post-curing of the 3D "green body" is necessary.

Thus, an appropriate inkjet printing ink has to combine (to fulfill) at the same time the following conditions: having a sufficient low viscosity (enables the printing of tiny drops through an inkjet nozzle), providing a high viscosity stability (e.g. should not polymerize in the printing apparatus prior the printing), being sufficiently pre-curable (each printed ink layer has to be pre-cured before the next layer is printed) and being efficiently post curable (fully curable in a subsequent step in order to provide the 3D object with the required quality properties).

Thus, it is an object to the present invention to provide an inkjet composition having 1.8 - 3.3 mol/kg acryloyl groups comprising:
i) photo polymerization reactive compound (M) containing exactly one acryloyl group,
ii) photo polymerization reactive compound (N) containing at least two acryloyl groups,
iii) radical photoinitiator (R),
iv) isocyanate compound (D) containing at least two isocyanate groups and
v) at least one hydroxyl group containing compound (H),
wherein
(M) is different from (D) with the proviso that isocyanate compound containing exactly one acryloyl group and additionally containing at least two isocyanate groups should be subsumed to (D);
(N) is different from (D) with the proviso that isocyanate compound containing at least two acryloyl groups and additionally containing at least two isocyanate groups should be subsumed to (D);
(H) is different from (D), (M) and (N);
10 - 28 mol % of the contained acryloyl groups are provided by the reactive compound (N) and the molar ratio of contained acryloyl groups to contained isocyanate groups of compound (D) is 0.9 to 3.3.

The isocyanate compound (D) containing at least two isocyanate groups might contain these isocyanate groups in a blocked form (which is preferred).

Acryloyl groups according to the present invention are defined as to be H₂C=CH-C(=O)- (which might be a part of an "acryl ester group" of the type H₂C=CH-C(=O)-O-). These groups are very reactive and efficient free radical polymerization groups (and much more reactive like e.g. meth acryl groups).

Photo polymerization reactive compound (M) "containing exactly one acryloyl group" means that not more and not less than one acryloyl group is contained.

(M) is different from (D) means that
photo polymerization reactive compound (relevant species) containing exactly one acryloyl group and additionally containing at least two cyanate groups should be subsumed to (D) (and not to (M)). However, the use of such "hybrid"-components is not preferred (might be avoided).

Accordingly, (N) is different from (D) means that that
photo polymerization reactive compound (relevant species) containing at least two acryloyl groups and additionally containing at least two cyanate groups should be subsumed to (D) (and not to (N)). However, the use of such "hybrid"-components is not preferred (might be avoided).

(H) is different from (D), (M) and (N) means that relevant "hybrid"-components (containing at least one hydroxyl group and the relevant specific groups of (D), (M) or (N)) are not subsumed to (H) but to (M), (N) or (D), accordingly. In other words: (H) is different from (D), (M) and (N) with the proviso that compound (one the one hand) containing at least one hydroxyl group and (on the other hand) fulfills the conditions for being (D), (M) or (N) should be not subsumed to (H).

According to the present invention, the inkjet composition comprises with (M) and (N) photocurable compound (based on "photo initiation") and with (D) also thermocurable compound.

The photocurable compound is able to polymerize and/or to crosslink in a first step by free radical (photo) polymerization and the thermocurable compound reacts in a subsequent thermal post curing step (via a polyaddition).

The inkjet composition according to the present invention fulfills the relevant quality requirements:
The composition provides the basis for a sufficient low viscosity which enables the generation of tiny (ink jettable) ink drops. Additionally, the composition provides the basis concerning a sufficient viscosity stability which is a basic requirement to maintain a working printing process (e.g. gelling of the ink would block and even destroy the printer).

Furthermore, the inkjet composition according to the present invention allows the generation of a pre-product with sufficient mechanical properties, especially of a pre-product with a sufficient "green body strength": The green body strength describes the stability of the object after photo-curing and before thermo-curing. The green body strength is a measure on the stability and crosslinking of the photo-cured object. However, it is not desired to provide a green body strength which is too high: During post-processing (thermal curing) the UV-system guarantees the shape consistency, meaning it holds the thermal system in place before and during its curing/ immobilization. However, once the thermal system starts to cure and depending on its properties, internal strain might be generated (especially if crosslinking in the first photo polymerisation step was too intensive) which can destroy the UV-cured structure (cracks). The inherent and technology typical roughness of the relevant surfaces leads to even easier crack formation due to internal strain generation. The use of an inkjet composition according to the present invention provides a kind of "compromise" that does take all of these relevant different issues into consideration - especially: crosslinking has to be rigid enough to provide green body strength and keep the thermal curing system in place on the one hand but must not be too brittle in order to survive thermal curing on the other hand.

The special "crosslinking strategy" that justifies the advantages according to the present invention is reflected in the underlying "laws" of the inkjet composition, which is decisively justified by compliance with the following (key) parameters I), II) and III):
I) inkjet composition having 1.8 - 3.3 mol/kg acryloyl groups;
II) 10 - 28 mol % of the contained acryloyl groups are provided by the reactive compound (N);
III) molar ratio of contained acryloyl groups to contained isocyanate groups of compound (D) is 0.9 to 3.3.

### (key) parameter I):

If the value is too high, a stronger tension is generated in the green body - later crack formation is favored - if the value is too low, the green body strength suffers: ultimately, among other things, a suitable compromise between providing strength and elasticity.

### (key) parameter II):

This parameter also provides a practical compromise solution between (green body) strength and elasticity. The poly acrylates in particular are decisive for the formation of the network and thus for sufficient green body strength.

The mono acrylates contribute in particular to the toughness-compatibility balance of the matrix network of the IPN with regard to tension compensation during thermal post-curing and to the control of hard and soft phases as well as phase domains.

The right balance of green body strength and post-curing efficiency is ensured by adhering to parameter II): Too low a value causes insufficient green strength whereby too high a value usually interferes with thermal post-curing: a (too) high a network density of the acrylate system reduces mobility (reactivity of the thermal post curing system reduced), which typically might promote cracking.

Compliance with parameter II also counteracts unwanted phase separation (by segregation) during printing application.

### (Key) parameter III):

In the broadest sense, this parameter ensures a balanced ratio of stabilization by means of pre-hardening and post-curing - concerns, among other things, compromise between green body strength and strength of the final body.

With increasing degree of curing of the first network (pre-curing), stronger stress is generated in the green body during the formation of the second, thermal network (post-curing), which favors the formation of cracks (would be disadvantageously associated with too high a value), but also ensures compatibility of the interpenetrated network formation. However, sufficient green body strength is essential (a value that is too low would ultimately be disadvantageous in this respect).

Parameter III) as a relative ratio is always to be seen in combination with parameter I), which ultimately determines the networking density of both networks.

A further provided effect concerning the use of an inkjet composition according to the present invention is that "bleeding" of the printed objects before and and during thermal cure is avoided (especially during the removal of the support structure with an aqueous liquid and during the thermal curing): Liquid material leaking from the printed 3D objects may cause health problems to end users because the liquid resin may contain reactive chemicals.

According to a special embodiment to the invention the inkjet composition might be provided as a kit: corresponding kit-in-parts inkjet composition may comprise a combination of at least one photocurable compound and at least one thermocurable compound and a separate photoinitiator. The kit-in-parts inkjet composition might comprise a combination of at least one photocurable compound, at least one thermocurable compound and a photoinitiator and a separate curing catalyst. However, in most cases it is not necessary and not advantageous to provide such a kit (a kit might be avoided).

According to a preferred embodiment the inkjet composition according to the present invention has 2.0 - 3.0 mol/kg acryloyl groups. Typically, in the inkjet composition 10 - 25 mol % of the contained acryloyl groups are provided by the reactive compound (N). The appropriate (quantitative) combination of the said two features "contained mol/kg acryloyl groups" and "mol % of the contained acryloyl groups provided by the reactive compound (N)" is also important concerning the provision of a pre-product (and also of the final product) which is not too brittle (tendency to crack) on the one hand but also not too soft on the other hand.

According to a preferred embodiment in the inkjet composition 90 - 100 mol %, preferably 95 - 100 mol %, of the reactive compound (N) are provided by species containing not more than three acryloyl groups. However, it is important to regard this regularity in combination with the said other features "contained mol/kg acryloyl groups" and "mol % of the contained acryloyl groups provided by the reactive compound (N)" because the (right quantitative) combination of these features has been identified as to be a basic requirement concerning the provision of a working process on the one hand and the generation of a product of high quality on the other hand.

Mono acrylates (especially compound (M)) often contribute regarding a moderate viscosity of the inkjet composition (especially species having a moderate molecular weight). A higher amount of mono acrylates reduces the degree of crosslinking.

The following mono acrylates might be used:
Ethyl acrylate, stearyl acrylate, tetrahydrofurfuryl acrylate, lauryl acrylate, 2-phenoxyethyl acrylate, isodecyl acrylate, isooctyl acrylate, tridecyl acrylate, caparolactone acrylate, ethoxylated nonyl phenol acrylate, isobornyl acrylate, hexadecyl acrylate, monomethoxy tripropylene glycol monoacrylate, monomethoxy neopentyl glycol propoxylate monoacrylate, B-carboxyethyl acrylate, and/or oxyethylated phenol acrylate.

According to a preferred embodiment the mono acrylate might be selected from dihydrodipentadienyl acrylate (CAS: 12542-30-2), cyclic trimethylolpropane formal acrylate (CAS: 66492-51-1), tricyclodecanemethanol acrylate (CAS: 93962-84-6), 2-phenylethyl acrylate (CAS: 3530-36-7), 2-hydroxy-3-phenoxypropylacrylat (CAS: 16969-10-1), 2-[(butylcarbamoyl)oxy]ethyl acrylate (63225-53-6) and/or 4-hydroxybutyl acrylate (2478-10-6).

However, the most preferred mono acrylate species are isobornyl acrylate, acryloyl morpholine, 2-[(butylcarbamoyl)oxy]ethyl acrylate or mixtures thereof.

The following di acrylates might be used: 1,3 butylene glycol diacrylate, 1,4 butanediol diacrylate, diethylene glycol diacrylate, 1,6 hexanediol diacrylate, neopentyl glycol diacrylate, polyethylene glycol diacrylate, tetraethylene glycol diacrylate, triethylene glycol diacrylate, dipropylene glycol diacrylate, tripopylene glycol diacrylate, polyethylene glycol diacrylate, ethoxylated bisphenol A diacrylate, propoxylated neopentyl glycol diacrylate, ethoxylated neopentyl glycol diacrylate, ethoxylated tripopylene glycol diacrylate and/or monomethoxy trimethylolpropane ethoxylate diacrylate.

The following tri acrylates might be used: trimethylol propane triacrylate, tris (2-hydroxy ethyl) isocyanurate triacrylate, ethoxylated trimethylol propane triacrylate, propoxylated glycerol triacrylate ditrimethylol propane triacrylate, pentaerythritol triacrylate, and/or propoxylated trimethylolpropane triacrylate.

However, preferred poly acrylates (especially as the photo polymerization reactive compound (N) containing at least two acryloyl groups) are trimethylolpropantriacrylat, tricyclodecane dimethanol diacrylate (CAS: 42594-17-2), polyethylene glycol diacrylate (CAS: 25322-68-3), polypropylene glycol diacrylate (CAS: 52496-08-9), polypropylene glycol) dimethacrylate (CAS: 25852-47-5), dipropylene glycol diacrylate (CAS: 57472-68-1), trimethylolpropane trimethacrylate (3290-92-4), bisphenol A glycerolate diacrylate (CAS: 4687-94-9), tris isocyanurate triacrylate (CAS: 40220-08-4), bisphenol A epoxy diacrylate (CAS: 55818-57-0) and/or trimethylolpropane tetraacrylate (CAS: 94108-97-1).

The photocurable compound(s) are comprised in the inkjet composition in mol amounts as specified above - that might be amounts of e.g. 20 to 50 wt.%, based on the total weight of the inkjet composition.

The photo polymerization reactive compound (species of (M) and (N)) and the radical photo initiator (R) may be comprised in the inkjet composition in a weight ratio of 95 : 5 to 99.5 : 0.5, preferably 97 : 3 to 99 : 1.

The photo initiator (R) generates reactive species (free radicals) when exposed to radiation (e.g. UV or visible light).

The photo initiator might be comprised in the inkjet composition in an amount of 0.2 to 4 wt.%, based on the total weight of the inkjet composition.

According to one embodiment species of the radical photoinitiator (R) are provided by phosphinoxide-based photoinitiators, preferably by diphenyl(2,4,6-trimethylbenzoyl)phosphine oxide and/or phenyl bis(2,4,6-trimethylbenzoyl)phosphine oxide.

The contained thermocurable compound is a compound which is able to addition polymerize (poly addition) and/or crosslink when exposed to heat. Preferably, the thermal curable compound should not polymerize and/or cross-link at temperatures below 100°C. According to the present invention the isocyanate compound (D) containing at least two isocyanate groups is provided as thermocurable compound.

Regarding the achieved quality (especially mechanical properties) it is important that there is an appropriate ratio in the inject composition regarding photo reactive groups (pre hardening according to the first step) on the one hand and thermal reactive groups (post hardening active) on the other hand. In this connection it is preferred that in the inkjet composition the molar ratio of contained acryloyl groups to contained isocyanate groups of compound (D) is 1.0 to 3.0.

The iso cyanate compound (D) containing at least two iso cyanate groups is comprised in the inkjet composition in an amount as defined above (indirectly defined: by means of the molar ratio of contained acryloyl groups to contained iso cyanate groups of compound (D)) which might be e.g. 25 to 50 wt.%, based on the total weight of the inkjet composition.

Such isocyanate compound (D) containing at least two isocyanate groups is well known by a skilled person. Relevant species are known as poly isocyanates, which might be aliphatic or aromatic polyisocyanates, preferably diisocyanates and/or such blocked aliphatic or aromatic polyisocyanates.

For the sake of clarity, the aliphatic or aromatic polyisocyanates might be used in free or blocked form. However, according to a preferred embodiment at least 90 mol %, preferably at least 99 mol % of the species of (D), are provided in a completely blocked (all isocyanate groups blocked) form, where preferably ε-caprolactam is used as the blocking group. According to a special preferred embodiment at least 90 mol % of the species of (D), preferably at least 99 mol % of the species of (D), are provided by completely blocked (both isocyanate groups blocked) diisocyanates, where preferably ε-caprolactam is used as blocking agent.

The aliphatic or aromatic polyisocyanate may preferably comprise toluylendiisocyanate, such as 2,4-toluylendiisocyanate or 4,4-toluylendiisocyanate, diphenylmethandiisocyanates, such as 4,4-diphenylmethandiisocayante, isophorondiisocyanate, dicyclohexylmethanediisocyanate, such as dicyclohexlmethan-4,4-diisocyanate, hexamethylendiisocyanate, such as hexamethylene-1,6-diisocyanate, or cyclohexyldiisocyanate, such as 1,4-cyclohexyldiisocyanate. Preferred are aromatic polyiisocyanates, such as toluylendiisocyanate, such as 2,4-toluylendiisocyanate or 4,4-toluylendiisocyanate, diphenylmethandiisocyanates, such as 4,4-diphenylmethandiisocayante or any mixture thereof.

According to the preferred thermal reaction (post-cure) mechanism the (thermally deblocked) isocyanate group reacts with a hydroxyl group by generating an urethan group. Relevant hydroxyl groups might be partly provided by hydroxy acrylates (e.g. hybrid compounds of (N) and/or (M) containing acryloyl- and hydroxyl-groups) but it is generally not preferred to provide said hydroxyl groups using such hybrid compounds. Generally, also hybrid compounds containing (blocked) isocyanate groups and hydroxyl groups might be (partly) used. However, such compounds are generally not preferred.

According to a preferred embodiment, the molar ratio of contained hydroxyl groups of compound (H) to contained isocyanate groups of compound (D) is 0.8 to 2.0, preferably 1.0 to 1.5 (referring said ratio: possible species containing at least two isocyanate groups and additionally at least one hydroxyl group are subsumed to (D)). Often, it is preferred to use a corresponding equimolar ratio (about 1 : 1) or to use only a small surplus of hydroxyl groups of compound (H).

Typically, at least 60 mol.%, preferably at least 90 mol.%, of the contained hydroxyl groups are provided by species of (H) which have exactly (not more and not less than) two hydroxyl groups (being diols). However, also polyols with more than two hydroxyl groups might be used. Species which might be used are e.g. 1,3-propandiol, 1,4-butandiol, 1,6-hexandiol, hydrochinon, trimethylolpropane, glycerin, 2-phenylalcohol and/or polypropylenglycols. However also (normally only partly) monools (containing exactly only one hydroxal group) might be used, which might be e.g. of the polyethylene glycol type.

In case blocked isocyanate species are used (the typical case) relevant species need to be (thermally) deblocked before being reactive with the diols. During the photo polymersiation (first step) these blocked species are inert and have to be deblocked to react (preferably at higher temperatures) in the post curing step.

Blocking of the thermocurable compound, preferably aliphatic or aromatic polyisocyanates, results in a latent reactive functional group which can be released after deblocking of the blocking agent to further react with additional reactive functional groups. Thereby, a blocking agent is reacted with the thermocurable compound, preferably aliphatic or aromatic polyisocyanates, to covalently bind the blocking agent to the reactive groups of the thermocurable compound (the isocyanate groups of the aliphatic or aromatic polyisocyanate). Deblocking of the thermocurable compound, might be achieved preferably by heating.

Preferably, the blocking agent may be selected from the group consisting of caprolactam, preferably ε-caprolactam, methyl ketone oxime, imidazole, 3,5-dimethylpyrazole or diisopropylamine. The blocking agent may preferably be selected from ε-caprolactam, methyl ketone oxime, imidazole or 3,5-dimethylpyrazole, even more preferably from ε-caprolactam. It is an advantage that ε-caprolactam is not volatile and thus it maintains in the object also during the thermal curing step. A volatile protecting group normally might cause problems in this connection (e.g. caused by non-desired bubble generation).

The blocking agent is generally present in an amount so that the reactive groups of the thermocurable compound are blocked to an extend of at least about 90%, preferably at least about 99%, most preferably 100% of the isocyanates.

In practice, concerning the blocked isocyanates, solubility in the UV-system and overall compatibility might be a challenge. That is why the UV-system for the relevant polyurethane materials are also designed in such a way (as described abov) that no phase separation occurs.

In case blocking groups are provided it is not necessary to use curing catalyst because at the relevant high "deblocking temperatures" the thermal curing reaction (urethane generation) works well without any catalyst. However, the curing temperature should be not too high as the UV-system might not survive temperature above 220°C for long time.

According to a preferred embodiment 90 - 100 wt. %, preferably 97- 100 wt. %, of the contained ingredients (in the inkjet composition) are provided by species of (M), (N), (R), (D) and (H).

The addition of other ingredients is possible but in many cases not advantageous (e.g. if there is no contribution concerning a curing effect or if non-desired thermal reactivity below 100 °C is caused): Generally, it is not preferred to use (higher amounts of) inert solvents (not able to photopolymerize in the first step or to post cure in the second step). Preferably, the inkjet composition contains less than 8 wt.%, more preferably less than 2 wt.%, inert solvents. Furthermore, it is not preferred to use (higher amounts of) radical polymerizable monomers not containing acryloyl groups (like meth acrylates). Preferably, the inkjet composition contains less than 6 wt.%, more preferably less than 2 wt.%, radical polymerizable monomers not containing acryloyl groups. For example, meth acrylates are e.g. not reactive enough regarding the (short) radical photo polymerization. Preferably, the inkjet composition contains less than 6 wt.%, more preferably less than 2 wt.%, meth acrylates (not containing acryloyl groups).

In order to avoid non-desired side reactions (typically increasing viscosity), it is preferred that the inkjet composition does not contain cationic and/ or anionic (photo)polymerization initiator. In any case it is preferred to avoid compounds (especially high amounts of them) which at temperatures below 100 °C react in the composition via one of the step reaction types: polyaddition, polycondensation. Such compounds (especially in higher amounts) might cause problems regarding the desired viscosity stability. It is essential to limit the viscosity of the inkjet composition in order to enable its jetting through a thin nozzle.

However, the inkjet composition according to the present invention additionally might contain stabilizers, wetting agents, radical polymerization inhibitor defoamers and/or pigments. Normally, dissolved oxygen works as radical polymerization inhibitor, but additionally synthetic inhibitors might be used.

Typically, the inkjet composition has a viscosity of 10 - 150 mPa.s at 45°C, where the viscosity is measured on a thermally controlled rotational rheometer in cone-plate geometry (Anton Paar Physica MCR 300, cone diameter: 60 mm, zero-gap distance: 0,061 mm, cone angle: 0,5°, shear-rate 600s-1).

The present invention also relates to a process for printing a three-dimensional object comprising the steps of:
(a) jetting the inkjet composition as described above by means of a printing machine to form a layer in a configured pattern corresponding to the shape of the object,
(b) irradiating the formed layer to form a photo-cured layer,
(c) sequentially repeating steps (a) and (b) to form a plurality of photo-cured layers in order to prepare a green body of the three-dimensional object and
(d) heating said green body to post cure the three-dimensional object.

Normally, additionally a support ink is printed and cured in order to stabilize the green body, where the cured support ink is water soluble and is removed after step c) and before the performance of step (d) by treating with an aqueous washing liquid.

Typically, step (d) is performed in such a way that temperatures between 140 and 190 °C are kept at least for 1 hour.

Normally, in the heating step (d) the relevant increase of the temperature is limited to 2 K/min.

Preferably, in step (b) the irradiation is performed by means of an UV lamp and the exposure time of each ink layer is 0.1 -2 s.

A typical procedure might be as follows:
The inkjet composition may be filtered before using it as an inkjet composition. Preferably, the inkjet composition is filtered in a manner so that it does not comprise particles having a particle size of more than 1 µm. Then, the ink is loaded into the printer. The system recirculates for at least 2 hours, better more to assure homogeneity and constant temperature. During printing, the support ink (e.g. acryl amide based) is ink-jetted and UV-cured creating a mold for the object ink which is ink-jetted and UV-cured afterwards (wet on dry printing). To control layer thickness all inks are levelled in their liquid state once on the building tray which takes place after ink-jetting during the dynamic wetting process on the substrate and before UV-curing. In this manner the 3D-object is generated. The support ink is printed layer per layer (together with the layers of the green body) so that after the printing process the object (green body) is surrounded by support material (e.g. poly acryl amid). To remove the support material, the entire structure is placed in a water bath and heated to 35-40°C in the presence of ultrasound. Depending on support material and geometry of the object, the washing process takes 0.5 h - 24 h, sometimes even longer. Once all support structure is removed, the object is taken out of the water bath and dried at room temperature on air. After about 5 h drying, the object is placed in a heating chamber (kind of oven) where depending on the chemistry, geometry and application a well-adapted temperature program is chosen to heat-cure the thermal curing system present in the printed and now washed object.

The present invention also relates to a three-dimensional object manufactured according to the method as described above.

The three-dimensional object may have a tensile strength of 0.5-25 MPa, preferably of 2-20 MPa and an elongation at break of 15 - 100 %, preferably of more than 100 % and an E-modulus of 1 - 1000 MPa, preferably of 10-200 MPa.

Additionally, the present invention is directed to the use of an inkjet composition as described above for manufacturing a three-dimensional object.

### General methods for measuring

Viscosity is measured on a thermally controlled rotational rheometer in cone-plate geometry (Anton Paar Physica MCR 300, cone diameter: 60 mm, zero-gap distance: 0,061 mm, cone angle: 0,5°, shear-rate 600s⁻¹) at temperatures from 40 to 60°C with a heating ramp of 2 K/min following the DIN EN ISO 3219. For comparison, the viscosity at 50 °C is shown in the following examples. Storage stability of inks was determined with the same experiment than described above after storing closed sample jars for 7 days at 60 or 80 °C.

The Shore hardness A and D was measured following the DIN EN ISO norm 7619 by a OS-2 measuring device from Hildebrand Prüf- und Messtechnik GmbH with cylindrical specimens in diameter of 40 mm and thickness of 7 mm. The results were taken off the scale after 3 seconds of placing the needle on the specimen. The measurement was repeated 5 times.

Tensile testing was performed on a Zwick-Roell tensile tester 1445 following the DIN EN ISO norm 527-1 with 5A specimen. E-Moduusl was determined from the slope of the stress-strain curve at deformations from 0.05-0.25 % at 1 mm/min. Tensile strength and elongation at break were determined by pulling the specimen at 25 mm/min for elastic samples.

The present invention is further described below by using examples.

### General Terms and Definitions

### Reactants as used in the examples

- Isobornylacrylate (IBOA) - CAS No 5888-33-5 from SARTOMER
- Acryloyl morpholine (ACMO)- CAS No 5117-12-4 from RAHN
- Trimethylolpropane triacrylate (TMPTA) - CAS No 15625-89-5 from SARTOMER
- Polyethylene glycol 600 diacrylate (PEG600DA, Miramer M286) - CAS No 26570-48-9 from MIWON
- 2-[[(Butylamino)carbonyl]oxy]ethyl acrylate (Genomer 1122tf) - CAS No 63225-53-6 from RAHN
- Dipropylene glycol diacrylate (DPGDA, Miramer M222) - CAS No 57472-68-1 from MIWON
- Omnirad 819 - photoinitiator with CAS No 162881-26-7 from IGM Resins
- Genorad 16 - polymerisation inhibitor being a combination of glycerol propoxylate (1PO/OH) and 4-methoxyphenol from RAHN
- BYK 333 - polyether modified polydimethylsiloxane additive from BYK
- K-KAT^{®} XK-651 - bismuth carboxylate catalyst from King Industries
- DESMSODUR N3400 - hexamethylendiisocyanate with CAS No. 28182-81-2 from COVESTRO
- ε-Caprolactam - CAS No. 105-60-2 from SIGMA ALDRICH
- Isophorone diisocyanate (IPDI) - CAS No 4098-71-9 from SIGMA ALDRICH
- DESMODUR BL3272 - ε-caprolactame blocked aliphatic polyisocyanate based on HDI (CAS No 26776-30-7) in 28% 1-methoxypropylacetate-2 (MPA CAS No 108-65-6) from COVESTRO
- DESMODUR BL3175 - butanonoxime blocked aliphatic polyisocyanate based on HDI (CAS No 85940-94-9) in 25% solvent naphtha 100 (SN CAS No 64742-95-6) from COVESTRO
- DESMODUR BL3575-1 - 3,5-dimethylpyrazole blocked aliphatic polyisocyanate based on HDI (CAS No 163206-31-3) in 25% 1-methoxypropylacetate-2/ Solvent naphta 100 8:17 from COVESTRO
- DESMODUR BL3475 - diethylmalonate blocked aliphatic polyisocyanate based on HDI/IPDI (DEM CAS No 105-53-3) in 25% n-butylacetate/ solvent naptha 100 1:1 (CAS No 123-86-4) from COVESTRO
- 1,3-Propanediole - CAS No 504-63-2 from SIGMA ALDRICH
- 1,6-Hexandiole - CAS No 629-11-8 from SIGMA ALDRICH
- Polytetrahydrofurane 250 (pTHF250) - CAS No 25190-06-1 from SIGMA ALDRICH
- Polypropylene glycol 400 (PPG400) - CAS No 25322-69-4 from SIGMA ALDRICH
- Polyethylene glycol 600 (PEG600) - CAS No 25322-68-3 from SIGMA ALDRICH

### Example 1:

### Synthesis of blocked isocyanate B! 1

Hexamethylendiisocyanate (DESMODUR N3400; 304.99 g; 2.92 mol; 1 eq.) was mixed with K-KAT^{®} XK-651 (KING INDUSTRIES, Bismuth-Carboxylate based; 4.4 g; 0.94 wt.%) in a 4-neck reactor (2500 mL) and stirred for 30 min at 50°C. Then, ε-Caprolactam (165.18 g; 1.46 mol; 2 eq.) was added at 50°C and further stirred for 3.5 h at 60°C.

### Synthesis of the inkjet composition

Isobornlyacrylate (34.5wt%), polyethylene glycole 600 diacrylate (PEG 600 DA) (12.0wt%), 2-[[(butylamino)carbonyl]oxy]ethyl acrylate (Genomer 1122tf) (12.0wt%), Omnirad 819 (1.2wt%), Genorad 16 (0.15wt%), BYK 333 (0.18wt%), 1,6-hexanediole (10.9wt%), the former synthesized blocked isocyanate compound B! 1 (29.0wt%) were mixed and filtered over 1 µm. The ink was ink-jet UV printed and post-cured at 130°C for 10h.

The final properties of the final object were:
Maximal tensile strength: 7 MPa
Elongation at break: 100%
E-Modulus: 20 MPa

The viscosity stability of Example 1 is measured to be as following:

| **Formulation** | **Time [days] at 60°C** | **Viscosity at 50°C [mPa·s]** |
|---|---|---|
| Example 1 | 0 | 29 |
| | 7 | 32 |

| **Example 1** | Wt% in formulation | Mol of functionality (for 1 kg final formulation) | % of all UV-curing functionalities | % of all curing functionalities |
|---|---|---|---|---|
| Compound | | | | |
| IBOA | 34.5 | 1.66 | 63% | 25% |
| PEG 600 DA | 12.0 | 0.40 | 15% | 6% |
| Genomer 1122tf | 12.0 | 0.56 | 21% | 9% |
| 1,6-Hexandiole | 10.9 | 1.84 | | 28% |
| BI 1 | 29.0 | 2.06 | | 32% |

The said inkjet composition comprises:
I) mol/kg acryloyl groups of (M) and (N): 2.61
II) mol% of acryloyl groups provided by reactive compound (N): 15.3
III) molar ratio of contained acryloyl groups (M) and (N) to contained isocyantate groups of compound (D): 1.27

### Example 2-14:

To screen ink and material properties of potential inkjet formulations molded specimens are cured for 30 s from each side in translucent silicon molds from the bottom at a distance of 15 cm by UV-light (LED 395 nm, 16 W/cm²). Then a thermal post-curing is carried out. Testing results of this photopolymerized and oven-cured bulk specimens are then emphasizing in a good proximity the final material performance of material jetted and post-cured formulations, even though the preparation process in the first curing-step of the interpenetrating system differs. Example 2-14 illustrate a varying formulation ratio of different acrylate, blocked isocyanate and polyol compounds to highlight the correlation of printing application and material characteristics.

### Example 2:

Isobornlyacrylate (18.0wt%), acryloyl morpholine (18.5wt%), (12.0wt%), trimethylpropane triacrylate (5.3wt%), Omnirad 819 (0.13wt%), Genorad 16 (0.09wt%), 1,6-hexanediole (15.9wt%), the former synthesized blocked isocyanate compound B! 1 (42.1wt%) were mixed. The ink was molded as described above and post-cured at 180°C for 1h.

The final properties of the final object were:
Maximal tensile strength: 17 MPa
Elongation at break: 15%
E-Modulus: 600 MPa
Hardness (after thermal post-cure): A86

The viscosity stability of Example 2 is measured to be as following:

| **Formulation** | **Time [days] at 60°C** | **Viscosity at 50°C [mPa·s]** |
|---|---|---|
| Example 2 | 0 | 44 |
| | 7 | 98 |

| **Example 2** | Wt% in formulation | Mol of functionality (for 1 kg final formulation) | % of all UV-curing functionalities | % of all curing functionalities |
|---|---|---|---|---|
| Compound | | | | |
| IBOA | 18.0 | 0.86 | 32% | 4% |
| ACMO | 18.5 | 1.31 | 48% | 17% |
| TMPTA | 5.3 | 0.54 | 20% | 6% |
| 1,6-Hexandiole | 15.9 | 2.69 | | 34% |
| B! 1 | 42.1 | 3.00 | | 38% |

The said inkjet composition comprises:
I) mol/kg acryloyl groups of (M) and (N): 2.71
II) mol% of acryloyl groups provided by reactive compound (N): 19.8
III) molar ratio of contained acryloyl groups (M) and (N) to contained isocyanate groups of compound (D): 0.91

### Example 3:

Isobornlyacrylate (36.5wt%), acryloyl morpholine (6.3wt%), glycole 600 diacrylate (6.3wt%), Dipropylene glycol diacrylate (0.5wt%), Omnirad 819 (0.15wt%), Genorad 16 (0.13wt%), 1,6-hexanediole (13.8wt%), the former synthesized blocked isocyanate compound BI 1 (36.3wt%) were mixed. The ink was molded as described above and post-cured at 180°C for 1h.

The final properties of the final object were:
Maximal tensile strength: 14 MPa
Elongation at break: 61%
E-Modulus: 300 MPa
Hardness (after thermal post-cure): A90

The viscosity stability of Example 3 is measured to be as following:

| **Formulation** | **Time [days] at 60°C** | **Viscosity at 50°C [mPa·s]** |
|---|---|---|
| Example 3 | 0 | 42 |
| | 7 | 61 |

| **Example 3** | Wt% in formulation | Mol of functionality (for 1 kg final formulation) | % of all UV-curing functionalities | % of all curing functionalities |
|---|---|---|---|---|
| Compound | | | | |
| IBOA | 36.5 | 1.75 | 72% | 24% |
| ACMO | 6.3 | 0.44 | 18% | 9% |
| PEG600DA | 6.3 | 0.21 | 9% | 3% |
| DPGDA | 0.5 | 0.04 | 2% | 1% |
| 1,6-Hexandiole | 13.8 | 2.33 | | 32% |
| BI 1 | 36.3 | 2.58 | | 35% |

The said inkjet composition comprises:
I) mol/kg acryloyl groups of (M) and (N): 2.44
II) mol% of acryloyl groups provided by reactive compound (N): 10.2
III) molar ratio of contained acryloyl groups (M) and (N) to contained isocyanate groups of compound (D): 0.95

### Example 4:

Isobornlyacrylate (38.5wt%), glycole 600 diacrylate (12.7wt%), Dipropylene glycol diacrylate (0.5wt%), Omnirad 819 (0.16wt%), Genorad 16 (0.1wt%), 1,6-hexanediole (13.2wt%), the former synthesized blocked isocyanate compound B! 1 (34.9wt%) were mixed. The ink was molded as described above and post-cured at 180°C for 1h.

The final properties of the final object were:
Maximal tensile strength: 12 MPa
Elongation at break: 87%
E-Modulus: 50 MPa
Hardness (after thermal post-cure): A86

The viscosity stability of Example 4 is measured to be as following:

| **Formulation** | **Time [days] at 60°C** | **Viscosity at 50°C [mPa·s]** |
|---|---|---|
| Example 4 | 0 | 38 |
| | 7 | 54 |

| **Example 4** | Wt% in formulation | Mol of functionality (for 1 kg final formulation) | % of all UV-curing functionalities | % of all curing functionalities |
|---|---|---|---|---|
| Compound | | | | |
| IBOA | 38.5 | 1.85 | 80% | 26% |
| PEG600DA | 12.7 | 0.42 | 18% | 6% |
| DPGDA | 0.5 | 0.04 | 2% | 1% |
| 1,6-Hexandiole | 13.2 | 2.22 | | 32% |
| BI 1 | 34.8 | 2.48 | | 35% |

The said inkjet composition comprises:
I) mol/kg acryloyl groups of (M) and (N): 2.31
II) mol% of acryloyl groups provided by reactive compound (N): 20.2
III) molar ratio of contained acryloyl groups (M) and (N) to contained isocyanate groups of compound (D): 0.93

### Example 5:

Isobornlyacrylate (30.2wt%), glycole 600 diacrylate (10.4wt%), 2-[[(butylamino)carbonyl]oxy]ethyl acrylate (Genomer 1122tf) (10.4wt%), Omnirad 819 (0.16wt%), Genorad 16 (0.1wt%), 1,6-hexanediole (13.2wt%), the former synthesized blocked isocyanate compound BI 1 (34.9wt%) were mixed. The ink was molded as described above and post-cured at 180°C for 1h.

The final properties of the final object were:
Maximal tensile strength: 5 MPa
Elongation at break: 110%
E-Modulus: 1 MPa
Hardness (after thermal post-cure): A80

| **Example 5** | Wt% in formulation | Mol of functionality (for 1 kg final formulation) | % of all UV-curing functionalities | % of all curing functionalities |
|---|---|---|---|---|
| Compound | | | | |
| IBOA | 30.2 | 1.44 | 64% | 21% |
| PEG600DA | 10.4 | 0.35 | 15% | 5% |
| Genomer 1122Tf | 10.4 | 0.48 | 21% | 7% |
| 1,6-Hexandiole | 13.5 | 2.23 | | 32% |
| BI 1 | 34.9 | 2.48 | | 35% |

The said inkjet composition comprises:
I) mol/kg acryloyl groups of (M) and (N): 2.28
II) mol% of acryloyl groups provided by reactive compound (N): 15.2
III) molar ratio of contained acryloyl groups (M) and (N) to contained isocyanate groups of compound (D): 0.92

### Example 6:

Isobornlyacrylate (34.5wt%), glycole 600 diacrylate (12.0wt%), 2-[[(butylamino)carbonyl]oxy]ethyl acrylate (Genomer 1122tf) (12.0wt%), Omnirad 819 (0.18wt%), Genorad 16 (0.12wt%), 1,3-propandiole (7.8wt%), the former synthesized blocked isocyanate compound BI 1 (32.2wt%) were mixed. The ink was molded as described above and post-cured at 180°C for 1h.

The final properties of the final object were:
Maximal tensile strength: 4 MPa
Elongation at break: 96%
E-Modulus: 1 MPa
Hardness (after UV-cure): A41
Hardness (after thermal post-cure): A67

The viscosity stability of Example 6 is measured to be as following:

| **Formulation** | **Time [days] at 60°C** | **Viscosity at 50°C [mPa·s]** |
|---|---|---|
| Example 6 | 0 | 34 |
| | 7 | 49 |

| **Example 6** | Wt% in formulation | Mol of functionality (for 1 kg final formulation) | % of all UV-curing functionalities | % of all curing functionalities |
|---|---|---|---|---|
| Compound | | | | |
| IBOA | 34.5 | 1.66 | 63% | 24% |
| PEG600DA | 12.0 | 0.40 | 15% | 6% |
| Genomer 1122Tf | 12.0 | 0.56 | 21% | 8% |
| 1,3-Propandiole | 7.8 | 2.06 | | 30% |
| B! 1 | 32.2 | 2.29 | | 33% |

The said inkjet composition comprises:
I) mol/kg acryloyl groups of (M) and (N): 2.61
II) mol% of acryloyl groups provided by reactive compound (N): 15.3
III) molar ratio of contained acryloyl groups (M) and (N) to contained isocyanate groups of compound (D): 1.14

### Example 7:

Isobornlyacrylate (34.5wt%), glycole 600 diacrylate (12.0wt%), 2-[[(butylamino)carbonyl]oxy]ethyl acrylate (Genomer 1122tf) (12.0wt%), Omnirad 819 (0.18wt%), Genorad 16 (0.12wt%), polytetrahydrofurane 250 (17.8wt%), the former synthesized blocked isocyanate compound B! 1 (22.2wt%) were mixed. The ink was molded as described above and post-cured at 180°C for 1h.

The final properties of the final object were:
Maximal tensile strength: 2 MPa
Elongation at break: 78%
E-Modulus: 1 MPa
Hardness (after UV-cure): A31
Hardness (after thermal post-cure): A50

The viscosity stability of Example 7 is measured to be as following:

| **Formulation** | **Time [days] at 60°C** | **Viscosity at 50°C [mPa·s]** |
|---|---|---|
| Example 7 | 0 | 27 |
| | 7 | 33 |

| **Example 7** | Wt% in formulation | Mol of functionality (for 1 kg final formulation) | % of all UV-curing functionalities | % of all curing functionalities |
|---|---|---|---|---|
| Compound | | | | |
| IBOA | 34.5 | 1.66 | 63% | 29% |
| PEG600DA | 12.0 | 0.40 | 15% | 7% |
| Genomer 1122Tf | 12.0 | 0.56 | 21% | 10% |
| pTHF250 | 17.8 | 1.42 | | 25% |
| B! 1 | 22.2 | 1.58 | | 28% |

The said inkjet composition comprises:
I) mol/kg acryloyl groups of (M) and (N): 2.61
II) mol% of acryloyl groups provided by reactive compound (N): 15.3
III) molar ratio of contained acryloyl groups (M) and (N) to contained isocyanate groups of compound (D): 1.65

### Example 8:

Isobornlyacrylate (34.5wt%), glycole 600 diacrylate (12.0wt%), 2-[[(butylamino)carbonyl]oxy]ethyl acrylate (Genomer 1122tf) (12.0wt%), Omnirad 819 (0.18wt%), Genorad 16 (0.12wt%), polypropylene glycol 400 (22.5wt%), the former synthesized blocked isocyanate compound B! 1 (17.5wt%) were mixed. The ink was molded as described above and post-cured at 180°C for 1h.

The final properties of the final object were:
Maximal tensile strength: 1 MPa
Elongation at break: 71%
E-Modulus: 2 MPa
Hardness (after UV-cure): A17
Hardness (after thermal post-cure): A40

The viscosity stability of Example 8 is measured to be as following:

| **Formulation** | **Time [days] at 60°C** | **Viscosity at 50°C [mPa·s]** |
|---|---|---|
| Example 8 | 0 | 20 |
| | 7 | 21 |

| **Example 8** | Wt% in formulation | Mol of functionality (for 1 kg final formulation) | % of all UV-curing functionalities | % of all curing functionalities |
|---|---|---|---|---|
| Compound | | | | |
| IBOA | 34.5 | 1.66 | 63% | 33% |
| PEG600DA | 12.0 | 0.40 | 15% | 8% |
| Genomer 1122Tf | 12.0 | 0.56 | 21% | 11% |
| PPG400 | 22.5 | 1.12 | | 23% |
| B! 1 | 17.5 | 1.25 | | 25% |

The said inkjet composition comprises:
I) mol/kg acryloyl groups of (M) and (N): 2.61
II) mol% of acryloyl groups provided by reactive compound (N): 15.3
III) molar ratio of contained acryloyl groups (M) and (N) to contained isocyanate groups of compound (D): 2.09

### Example 9:

Isobornlyacrylate (34.5wt%), glycole 600 diacrylate (12.0wt%), 2-[[(butylamino)carbonyl]oxy]ethyl acrylate (Genomer 1122tf) (12.0wt%), Omnirad 819 (0.18wt%), Genorad 16 (0.12wt%), polyethylene glycol 600 (26.3wt%), the former synthesized blocked isocyanate compound B! 1 (13.7wt%) were mixed. The ink was molded as described above and post-cured at 180°C for 1h.

The final properties of the final object were:
Maximal tensile strength: 2 MPa
Elongation at break: 92%
E-Modulus: 1 MPa
Hardness (after UV-cure): A53
Hardness (after thermal post-cure): A61

The viscosity stability of Example 9 is measured to be as following:

| **Formulation** | **Time [days] at 60°C** | **Viscosity at 50°C [mPa·s]** |
|---|---|---|
| Example 9 | 0 | 22 |
| | 7 | 28 |

| **Example 9** | Wt% in formulation | Mol of functionality (for 1 kg final formulation) | % of all UV-curing functionalities | % of all curing functionalities |
|---|---|---|---|---|
| Compound | | | | |
| IBOA | 34.5 | 1.66 | 63% | 37% |
| PEG600DA | 12.0 | 0.40 | 15% | 9% |
| Genomer 1122Tf | 12.0 | 0.56 | 21% | 12% |
| PEG600 | 26.3 | 0.88 | | 20% |
| BI 1 | 13.7 | 0.98 | | 22% |

The said inkjet composition comprises:
I) mol/kg acryloyl groups of (M) and (N): 2.61
II) mol% of acryloyl groups provided by reactive compound (N): 15.3
III) molar ratio of contained acryloyl groups (M) and (N) to contained isocyanate groups of compound (D): 2.68

### Example 10:

### Synthesis of blocked isocyanate B! 2

Isophorone diisocyanate (56.34 g; 253.3 mmol; 2 eq.) was mixed with K-KAT^{®} XK-651 (KING INDUSTRIES, Bismuth-Carboxylate based; 1.0 g; 1.0 wt.%) in a 4-neck reactor (2500 mL) and stirred for 5 min at 50°C. 1,6-Hexandiole (14.99 g, 126.8 mmol, 1 eq.) was melted carefully and then added dropwise in a time-frame of 5 min in a way that the reaction temperature was not exceeding 75 °C and the reaction mixture further stirred for 3,5 h at 50 °C. Then, ε-Caprolactame (27.73 g; 425.1 mmol; 2 eq.) was added at 70°C and further stirred for 3 h at 70°C.

### Synthesis of the inkjet composition

Isobornylacrylate (36.9wt%), glycole 600 diacrylate (12.3wt%), dipropylene glycol diacrylate (0.5wt%), Omnirad 819 (0.15wt%), Genorad 16 (0.1wt%), BYK333 (0.13wt%), polyethylene glycol 600 (22.8wt%), the former synthesized blocked isocyanate compound B! 2 (27.2wt%) were mixed. The ink was molded as described above and post-cured at 180°C for 1h.

The final properties of the final object were:
Maximal tensile strength: 2 MPa
Elongation at break: 31%
E-Modulus: 13 MPa

The viscosity stability of Example 10 is measured to be as following:

| **Formulation** | **Time [days] at 80°C** | **Viscosity at 50°C [mPa·s]** |
|---|---|---|
| Example 10 | 0 | 74 |
| | 7 | 132 |

| **Example 10** | Wt% in formulation | Mol of functionality (for 1 kg final formulation) | % of all UV-curing functionalities | % of all curing functionalities |
|---|---|---|---|---|
| Compound | | | | |
| IBOA | 36.9 | 1.77 | 80% | 48% |
| PEG600DA | 12.3 | 0.41 | 18% | 11% |
| DPGDA | 0.5 | 0.04 | 2% | 1% |
| PEG600 | 22.8 | 0.76 | | 21% |
| BI 2 | 27.2 | 0.69 | | 19% |

The said inkjet composition comprises:
I) mol/kg acryloyl groups of (M) and (N): 2.22
II) mol% of acryloyl groups provided by reactive compound (N): 20.3
III) molar ratio of contained acryloyl groups (M) and (N) to contained isocyanate groups of compound (D): 3.21

### Example 11:

Isobornylacrylate (36.9wt%), glycole 600 diacrylate (12.3wt%), dipropylene glycol diacrylate (0.5wt%), Omnirad 819 (0.15wt%), Genorad 16 (0.1wt%), polytetrahydrofurane (10.7wt%) and Desmodur BL3272 (39.3wt%) were mixed. The ink was molded as described above and post-cured at 180°C for 1h.

The final properties of the final object were:
Maximal tensile strength: 7 MPa
Elongation at break: 79%
E-Modulus: 60 MPa
Hardness (after UV-cure): A24
Hardness (after thermal post-cure): A64

The viscosity stability of Example 11 is measured to be as following:

| **Formulation** | **Time [days] at 60°C** | **Viscosity at 50°C [mPa·s]** |
|---|---|---|
| Example 11 | 0 | 30 |
| | 7 | 31 |

| **Example 11** | Wt% in formulation | Mol of functionality (for 1 kg final formulation) | % of all UV-curing functionalities | % of all curing functionalities |
|---|---|---|---|---|
| Compound | | | | |
| IBOA | 36.9 | 1.77 | 80% | 43% |
| PEG600DA | 12.3 | 0.41 | 18% | 10% |
| DPGDA | 0.5 | 0.04 | 2% | 1% |
| pTHF250 | 10.7 | 0.86 | | 21% |
| Desmodur | | | | |
| BL3272 | 28.3 | 1.00 | | 25% |
| MPA | 11.0 | | | |

The said inkjet composition comprises:
I) mol/kg acryloyl groups of (M) and (N): 2.22
II) mol% of acryloyl groups provided by reactive compound (N): 20.3
III) molar ratio of contained acryloyl groups (M) and (N) to contained isocyanate groups of compound (D): 2.20

### Example 12:

Isobornylacrylate (36.9wt%), glycole 600 diacrylate (12.3wt%), dipropylene glycol diacrylate (0.5wt%), Omnirad 819 (0.15wt%), Genorad 16 (0.1wt%), polytetrahydrofurane (11.5wt%) and Desmodur BL3175 (38.5wt%) were mixed. The ink was molded as described above and post-cured at 170°C for 1h.

The final properties of the final object were:
Maximal tensile strength: 2 MPa
Elongation at break: 110%
E-Modulus: 1 MPa
Hardness (after thermal post-cure): A22

The viscosity stability of Example 12 is measured to be as following:

| **Formulation** | **Time [days] at 60°C** | **Viscosity at 50°C [mPa·s]** |
|---|---|---|
| Example 12 | 0 | 33 |
| | 7 | 34 |

| **Example 12** | Wt% in formulation | Mol of functionality (for 1 kg final formulation) | % of all UV-curing functionalities | % of all curing functionalities |
|---|---|---|---|---|
| Compound | | | | |
| IBOA | 36.9 | 1.77 | 80% | 41% |
| PEG600DA | 12.3 | 0.41 | 18% | 10% |
| DPGDA | 0.5 | 0.04 | 2% | 1% |
| pTHF250 | 11.5 | 0.92 | | 21% |
| Desmodur | | | | |
| BL3175 | 28. | 1.13 | | 27% |
| SN | 9.6 | | | |

The said inkjet composition comprises:
I) mol/kg acryloyl groups of (M) and (N): 2.22
II) mol% of acryloyl groups provided by reactive compound (N): 20.3
III) molar ratio of contained acryloyl groups (M) and (N) to contained isocyanate groups of compound (D): 1.96

### Example 13:

Isobornylacrylate (36.9wt%), glycole 600 diacrylate (12.3wt%), dipropylene glycol diacrylate (0.5wt%), Omnirad 819 (0.15wt%), Genorad 16 (0.1wt%), polytetrahydrofurane (11.0wt%) and Desmodur BL3575-1 (39.0wt%) were mixed. The ink was molded as described above and post-cured at 150°C for 1h.

The final properties of the final object were:
Maximal tensile strength: 4 MPa
Elongation at break: 140%
E-Modulus: 1 MPa
Hardness (after thermal post-cure): A28

The viscosity stability of Example 13 is measured to be as following:

| **Formulation** | **Time [days] at 60°C** | **Viscosity at 50°C [mPa·s]** |
|---|---|---|
| Example 13 | 0 | 28 |
| | 7 | 30 |

| **Example 13** | Wt% in formulation | Mol of functionality (for 1 kg final formulation) | % of all UV-curing functionalities | % of all curing functionalities |
|---|---|---|---|---|
| Compound | | | | |
| IBOA | 36.9 | 1.77 | 80% | 42% |
| PEG600DA | 12.3 | 0.41 | 18% | 10% |
| DPGDA | 0.5 | 0.04 | 2% | 1% |
| pTHF250 | 11.0 | 0.88 | | 21% |
| Desmodur | | | | |
| BL375-1 | 29.3 | 1.11 | | 26% |
| SN/MPA | 9.8 | | | |

The said inkjet composition comprises:
I) mol/kg acryloyl groups of (M) and (N): 2.22
II) mol% of acryloyl groups provided by reactive compound (N): 20.3
III) molar ratio of contained acryloyl groups (M) and (N) to contained isocyanate groups of compound (D): 2.00

### Example 14:

Isobornylacrylate (36.9wt%), glycole 600 diacrylate (12.3wt%), dipropylene glycol diacrylate (0.5wt%), Omnirad 819 (0.15wt%), Genorad 16 (0.1wt%), polytetrahydrofurane (9.0wt%) and Desmodur BL3475 (41.0wt%) were mixed. The ink was molded as described above and post-cured at 140°C for 1h.

The final properties of the final object were:
Maximal tensile strength: 2 MPa
Elongation at break: 110%
E-Modulus: 1 MPa
Hardness (after thermal post-cure): A25

The viscosity stability of Example 14 is measured to be as following:

| **Formulation** | **Time [days] at 60°C** | **Viscosity at 50°C [mPa·s]** |
|---|---|---|
| Example 14 | 0 | 23 |
| | 7 | 269 |

The stability of this inkjet-ink with the blocking agent diethylmalonate at 60°C is measured to be too poor to further process the ink.

| **Example 14** | Wt% in formulation | Mol of functionality (for 1 kg final formulation) | % of all UV-curing functionalities | % of all curing functionalities |
|---|---|---|---|---|
| Compound | | | | |
| IBOA | 36.9 | 1.77 | 80% | 37% |
| PEG600DA | 12.3 | 0.41 | 18% | 8% |
| DPGDA | 0.5 | 0.04 | 2% | 1% |
| pTHF250 | 9.0 | 0.72 | | 15% |
| Desmodur | | | | |
| BL3475 | 30.8 | 1.88 | | 39% |
| SN/BN | 10.3 | | | |

The said inkjet composition comprises:
I) mol/kg acryloyl groups of (M) and (N): 2.22
II) mol% of acryloyl groups provided by reactive compound (N): 20.3
III) molar ratio of contained acryloyl groups (M) and (N) to contained isocyanate groups of compound (D): 1.18

## Claims

1. An inkjet composition having 1.8 - 3.3 mol/kg acryloyl groups comprising:
i) photo polymerization reactive compound (M) containing exactly one acryloyl group,
ii) photo polymerization reactive compound (N) containing at least two acryloyl groups,
iii) radical photoinitiator (R),
iv) isocyanate compound (D) containing at least two isocyanate groups and
v) at least one hydroxyl group containing compound (H),
wherein
(M) is different from (D) with the proviso that isocyanate compound containing exactly one acryloyl group and additionally containing at least two isocyanate groups should be subsumed to (D);
(N) is different from (D) with the proviso that isocyanate compound containing at least two acryloyl groups and additionally containing at least two isocyanate groups should be subsumed to (D);
(H) is different from (D), (M) and (N);
10 - 28 mol % of the contained acryloyl groups are provided by the reactive compound (N) and the molar ratio of contained acryloyl groups to contained isocyanate groups of compound (D) is 0.9 to 3.3.

2. An inkjet composition according to claim 1 having 2.0 - 3.0 mol/kg acryloyl groups.

3. An inkjet composition according to claim 1 or 2 in which 10 - 25 mol % of the contained acryloyl groups are provided by the reactive compound (N).

4. An inkjet composition according to one of the claims 1-3, where 90 - 100 mol %, preferably 95 - 100 mol %, of the reactive compound (N) are provided by species containing not more than three acryloyl groups.

5. An inkjet composition according to one of the claims 1-4, where the molar ratio of contained acryloyl groups to contained isocyanate groups of compound (D) is 1.0 to 3.0.

6. An inkjet composition according to one of the claims 1 to 5, where species of the radical photoinitiator (R) are provided phosphine oxide based photo initiators, preferably by diphenyl(2,4,6-trimethylbenzoyl)phosphine oxide and/or phenylbis(2,4,6-trimethylbenzoyl)phosphine oxide.

7. An inkjet composition according to one of the claims 1 to 6, in which at least 90 mol % of the species of (D), preferably at least 99 mol % of the species of (D), are provided in a completely blocked form, wherein all isocyanate groups are blocked, where preferably ε-caprolactam is used as the blocking group

8. An inkjet composition according to one of the claims 1 to 7, in which the molar ratio of contained hydroxyl groups of compound (H) to contained isocyanate groups of compound (D) is 0.8 to 2.0, preferably 1.0 to 1.5.

9. An inkjet composition according to one of the claims 1 to 8, in which at least 60 mol.%, preferably at least 90 mol.%, of the contained hydroxyl groups are provided by species of (H) which have exactly two hydroxyl groups.

10. An inkjet composition according to one of the claims 1 to 9 in which 90 - 100 wt. %, preferably 97 - 100 wt. %, of the contained ingredients are provided by species of (M), (N), (R), (D) and (H).

11. An inkjet composition according to one of the claims 1 to 10 having a viscosity of 10 - 150 mPa.s at 45°C, where the viscosity is measured on a thermally controlled rotational rheometer in cone-plate geometry, cone diameter: 60 mm, zero-gap distance: 0,061 mm, cone angle: 0,5°, shear-rate 600s-1, at temperatures from 40 to 60°C with a heating ramp of 2 K/min following the DIN EN ISO 3219.

12. An inkjet composition according to one of the claims 1 to 11, which does not contain cationic and/or anionic (photo)polymerization initiator.

13. An inkjet composition according to one of the claims 1 to 12, containing less than 6 wt.%, more preferably less than 2 wt.%, radical polymerizable monomers not containing acryloyl groups.

14. An inkjet composition according to one of the claims 1 to 13, additionally containing stabilizers, wetting agents, radical polymerization inhibitor, defoamers and/or pigments.

15. A process for printing a three dimensional object comprising the steps of:
(a) jetting the inkjet composition according to one of the claims 1 - 14 by means of a printing machine to form a layer in a configured pattern corresponding to the shape of the object,
(b) irradiating the formed layer to form a photo-cured layer,
(c) sequentially repeating steps (a) and (b) to form a plurality of photo-cured layers in order to prepare a green body of the three dimensional object and
(d) heating said green body to post cure the three-dimensional object.

16. A process according to claim 15, in which additionally a support ink is printed and cured in order to stabilize the green body, where the cured support ink is water soluble and is removed after step c) and before the performance of step (d) by treating with an aqueous washing liquid.

17. A process according to one of the claims 15 or 16 in which step (d) is performed in such a way that temperatures between 140 and 190 °C are kept at least for 1 hour.

18. A process according to one of the claims 15 - 17 in which in step (b) the irradiation is performed by means of an UV lamp and the exposure time of each the ink layer is 0.1 - 2 s.

19. A three-dimensional object manufactured according to the method according to one of the claims 15 to 18.

20. Use of an inkjet composition according to one of the claims 1 to 14 for manufacturing a three-dimensional object.

## Patentansprüche

1. Tintenstrahlzusammensetzung mit 1,8-3,3 mol/kg Acryloylgruppen, umfassend:
i) eine photopolymerisationsreaktive Verbindung (M) mit genau einer Acryloylgruppe,
ii) eine photopolymerisationsreaktive Verbindung (N) mit mindestens zwei Acryloylgruppen,
iii) einen Radikalphotoinitiator (R),
iv) eine Isocyanatverbindung (D) mit mindestens zwei Isocyanatgruppen und
v) mindestens eine hydroxylgruppenhaltige Verbindung (H),
wobei
(M) von (D) verschieden ist, mit der Maßgabe, dass die Isocyanatverbindung mit genau einer Acryloylgruppe und zusätzlich mit mindestens zwei Isocyanatgruppen zu (D) zu zählen ist;
(N) von (D) verschieden ist, mit der Maßgabe, dass die Isocyanatverbindung mit mindestens zwei Acryloylgruppen und zusätzlich mit mindestens zwei Isocyanatgruppen zu (D) zu zählen ist;
(H) von (D), (M) und (N) verschieden ist;
10-28 Mol-% der enthaltenen Acryloylgruppen durch die reaktive Verbindung (N) bereitgestellt werden und das Molverhältnis von enthaltenen Acryloylgruppen zu enthaltenen Isocyanatgruppen von Verbindung (D) 0,9 bis 3,3 beträgt.

2. Tintenstrahlzusammensetzung nach Anspruch 1 mit 2,0-3,0 mol/kg Acryloylgruppen.

3. Tintenstrahlzusammensetzung nach Anspruch 1 oder 2, in der 10-25 Mol-% der enthaltenen Acryloylgruppen durch die reaktive Verbindung (N) bereitgestellt werden.

4. Tintenstrahlzusammensetzung nach einem der Ansprüche 1-3, wobei 90-100 Mol-%, vorzugsweise 95-100 Mol-%, der reaktiven Verbindung (N) durch Spezies mit nicht mehr als drei Acryloylgruppen bereitgestellt werden.

5. Tintenstrahlzusammensetzung nach einem der Ansprüche 1-4, wobei das Molverhältnis von enthaltenen Acryloylgruppen zu enthaltenen Isocyanatgruppen der Verbindung (D) 1,0 bis 3,0 beträgt.

6. Tintenstrahlzusammensetzung nach einem der Ansprüche 1 bis 5, wobei Spezies des Radikalphotoinitiators (R) durch Photoinitiatoren auf Phosphinoxid-Basis, vorzugsweise durch Diphenyl(2,4,6-trimethylbenzoyl)phosphinoxid und/oder Phenylbis(2,4,6-trimethylbenzoyl)phosphinoxid, bereitgestellt werden.

7. Tintenstrahlzusammensetzung nach einem der Ansprüche 1 bis 6, in der mindestens 90 Mol-% der Spezies von (D), vorzugsweise mindestens 99 Mol-% der Spezies von (D), in einer vollständig blockierten Form bereitgestellt sind, wobei alle Isocyanatgruppen blockiert sind, wobei vorzugsweise ε-Caprolactam als Blockierungsgruppe verwendet wird.

8. Tintenstrahlzusammensetzung nach einem der Ansprüche 1 bis 7, in der das Molverhältnis von enthaltenen Hydroxylgruppen von Verbindung (H) zu enthaltenen Isocyanatgruppen von Verbindung (D) 0,8 bis 2,0, vorzugsweise 1,0 bis 1,5, beträgt.

9. Tintenstrahlzusammensetzung nach einem der Ansprüche 1 bis 8, in der mindestens 60 Mol-%, vorzugsweise mindestens 90 Mol-%, der enthaltenen Hydroxylgruppen durch Spezies von (H) mit genau zwei Hydroxylgruppen bereitgestellt werden.

10. Tintenstrahlzusammensetzung nach einem der Ansprüche 1 bis 9, in der 90-100 Gew.- %, vorzugsweise 97-100 Gew.-% der enthaltenen Inhaltsstoffe durch Spezies von (M), (N), (R), (D) und (H) bereitgestellt werden.

11. Tintenstrahlzusammensetzung nach einem der Ansprüche 1 bis 10 mit einer Viskosität von 10-150 MPa.s bei 45 °C, wobei die Viskosität auf einem temperierten Rotationsrheometer in Kegel-Platte-Geometrie, Kegeldurchmesser: 60 mm, Nullspaltabstand: 0,061 mm, Kegelwinkel: 0,5°, Scherrate 600s⁻¹, bei Temperaturen von 40 bis 60 °C mit einer Aufheizrate von 2 K/min gemäß DIN EN ISO 3219 gemessen wird.

12. Tintenstrahlzusammensetzung nach einem der Ansprüche 1 bis 11, die keinen kationischen und/oder anionischen (Photo)polymerisationsinitiator enthält.

13. Tintenstrahlzusammensetzung nach einem der Ansprüche 1 bis 12, die weniger als 6 Gew.-%, weiter bevorzugt weniger als 2 Gew.-%, radikalisch polymerisierbare Monomere ohne Acryloylgruppen enthält.

14. Tintenstrahlzusammensetzung nach einem der Ansprüche 1 bis 13, die zusätzlich Stabilisatoren, Netzmittel, Radikalpolymerisationsinhibitoren, Entschäumer und/oder Pigmente enthält.

15. Verfahren zum Drucken eines dreidimensionalen Objekts, das folgende Schritte umfasst:
(A) Ausstoßen der Tintenstrahlzusammensetzung nach einem der Ansprüche 1-14 mit Hilfe einer Druckmaschine zur Bildung einer Schicht in einem konfigurierten Muster, das der Gestalt des Objekts entspricht,
(b) Bestrahlen der gebildeten Schicht zur Bildung einer photogehärteten Schicht,
(c) aufeinanderfolgendes Wiederholen der Schritte (a) und (b) zur Bildung mehrerer photogehärteter Schichten zur Herstellung eines Grünkörpers des dreidimensionalen Objekts und
(d) Erhitzen des Grünkörpers zum Nachhärten des dreidimensionalen Objekts.

16. Verfahren nach Anspruch 15, bei dem zusätzlich eine Trägertinte verdruckt und gehärtet wird, um den Grünkörper zu stabilisieren, wobei die gehärtete Trägertinte wasserlöslich ist und nach Schritt c) und vor der Durchführung von Schritt d) durch Behandeln mit einer wässrigen Waschflüssigkeit entfernt wird.

17. Verfahren nach Anspruch 15 oder 16, bei dem Schritt (d) so durchgeführt wird, dass Temperaturen zwischen 140 und 190 °C mindestens 1 Stunde gehalten werden.

18. Verfahren nach einem der Ansprüche 15-17 , bei dem in Schritt (b) die Bestrahlung mit Hilfe einer UV-Lampe durchgeführt wird und die Expositionszeit jeder Tintenschicht 0,1 -2 s beträgt.

19. Dreidimensionales Objekt, hergestellt gemäß dem Verfahren nach einem der Ansprüche 15 bis 18.

20. Verwendung einer Tintenstrahlzusammensetzung nach einem der Ansprüche 1 bis 14 zur Herstellung eines dreidimensionalen Objekts.

## Revendications

1. Composition pour jet d'encre ayant 1,8 à 3,3 mole/kg de groupes acryloyle comprenant :
i) un composé réactif de photopolymérisation (M) contenant exactement un groupe acryloyle,
ii) un composé réactif de photopolymérisation (N) contenant au moins deux groupes acryloyle,
iii) un photoinitiateur de radicaux (R),
iv) un composé isocyanate (D) contenant au moins deux groupes isocyanate et
v) au moins un composé (H) contenant un groupe hydroxyle,
dans laquelle
(M) est différent de (D), à condition que le composé isocyanate contenant exactement un groupe acryloyle et contenant de plus au moins deux groupes isocyanate soit inclus dans (D) ;
(N) est différent de (D) à condition que le composé isocyanate contenant au moins deux groupes acryloyle et contenant de plus au moins deux groupes isocyanate soit inclus dans (D) ;
(H) est différent de (D), (M) et (N) ;
10 à 28 % en moles des groupes acryloyle contenus sont fournis par le composé réactif (N) et le rapport molaire des groupes acryloyle contenus sur les groupes isocyanate contenus du composé (D) est de 0,9 à 3,3.

2. Composition pour jet d'encre selon la revendication 1, ayant 2,0 à 3,0 mole/kg de groupes acryloyle.

3. Composition pour jet d'encre selon la revendication 1 ou 2, dans laquelle 10 à 25 % en moles des groupes acryloyle contenus sont fournis par le composé réactif (N).

4. Composition pour jet d'encre selon l'une des revendications 1 à 3, dans laquelle 90 à 100 % en moles, de préférence 95 à 100 % en moles, du composé réactif (N) sont fournis par des espèces ne contenant pas plus de trois groupes acryloyle.

5. Composition pour jet d'encre selon l'une des revendications 1 à 4, dans laquelle le rapport molaire des groupes acryloyle contenus sur les groupes isocyanate contenus du composé (D) est de 1,0 à 3,0.

6. Composition pour jet d'encre selon l'une des revendications 1 à 5, dans laquelle des espèces du photoinitiateur de radicaux (R) sont fournies par des photoinitiateurs à base d'oxyde de phosphine, de préférence par l'oxyde de diphényl(2,4,6-triméthylbenzoyl)phosphine et/ou l'oxyde de phénylbis(2,4,6-triméthylbenzoyl)phosphine.

7. Composition pour jet d'encre selon l'une des revendications 1 à 6, dans laquelle au moins 90 % en moles des espèces de (D), de préférence au moins 99 % en moles des espèces de (D), sont fournies sous une forme complètement bloquée, dans laquelle tous les groupes isocyanate sont bloqués, de préférence l'ε-caprolactame étant utilisé comme groupe de blocage.

8. Composition pour jet d'encre selon l'une des revendications 1 à 7, dans laquelle le rapport molaire des groupes hydroxyle contenus du composé (H) sur les groupes isocyanate contenus du composé (D) est de 0,8 à 2,0, de préférence de 1,0 à 1,5.

9. Composition pour jet d'encre selon l'une des revendications 1 à 8, dans laquelle au moins 60 % en moles, de préférence au moins 90 % en moles, des groupes hydroxyle contenus sont fournis par des espèces de (H) qui ont exactement deux groupes hydroxyle.

10. Composition pour jet d'encre selon l'une des revendications 1 à 9, dans laquelle 90 à 100 % en poids, de préférence 97 à 100 % en poids des ingrédients contenus sont fournis par des espèces de (M), (N), (R), (D) et (H).

11. Composition pour jet d'encre selon l'une des revendications 1 à 10, ayant une viscosité de 10 à 150 mPa.s à 45 °C, dans laquelle la viscosité est mesurée sur un rhéomètre rotatif thermiquement régulé en géométrie cône-plaque, diamètre de cône : 60 mm, distance zéro écart : 0,061 mm, angle de cône : 0,5°, vitesse de cisaillement 600s-1, à des températures de 40 à 60 °C avec une rampe de chauffage de 2 K/min selon la norme DIN EN ISO 3219.

12. Composition pour jet d'encre selon l'une des revendications 1 à 11, qui ne contient pas d'initiateur de (photo)polymérisation cationique et/ou anionique.

13. Composition pour jet d'encre selon l'une des revendications 1 à 12, contenant moins de 6 % en poids, plus préférablement moins de 2 % en poids, de monomères polymérisables par voie radicalaire ne contenant pas de groupes acryloyle.

14. Composition pour jet d'encre selon l'une des revendications 1 à 13, contenant de plus des stabilisants, des agents mouillants, un inhibiteur de polymérisation radicalaire, des agents antimousse et/ou des pigments.

15. Procédé d'impression d'un objet tridimensionnel comprenant les étapes de :
(a) projection de la composition pour jet d'encre selon l'une des revendications 1 à 14 au moyen d'une machine d'impression pour former une couche dans un motif configuré correspondant à la forme de l'objet,
(b) irradiation de la couche formée pour former une couche photodurcie,
(c) répétition séquentiellement des étapes (a) et (b) pour former une pluralité de couches photodurcies afin de préparer un corps vert de l'objet tridimensionnel, et
(d) chauffage dudit corps vert pour post-durcir l'objet tridimensionnel.

16. Procédé selon la revendication 15, dans lequel de plus une encre de support est imprimée et durcie afin de stabiliser le corps vert, l'encre de support durcie étant soluble dans l'eau et étant éliminée après l'étape c) et avant la réalisation de l'étape (d) par traitement avec un liquide de lavage aqueux.

17. Procédé selon l'une des revendications 15 ou 16, dans lequel l'étape (d) est réalisée de telle sorte que des températures comprises entre 140 et 190°C soient maintenues au moins pendant 1 heure.

18. Procédé selon l'une des revendications 15 à 17, dans lequel, dans l'étape (b), l'irradiation est effectuée au moyen d'une lampe UV et le temps d'exposition de chaque couche d'encre est de 0,1 à 2 s.

19. Objet tridimensionnel fabriqué selon le procédé selon l'une des revendications 15 à 18.

20. Utilisation d'une composition pour jet d'encre selon l'une des revendications 1 à 14 pour la fabrication d'un objet tridimensionnel.
